(19) Europäisches Patentamt

European Patent Office

Office européen des brevets

(11) Publication number: **0 569 639 A1**

## (12) EUROPEAN PATENT APPLICATION

(21) Application number: 92307666.5

(22) Date of filing: **21.08.92**

(51) Int. Cl.5: **C08F 220/18**, C10M 145/14, //C10N40:04

(30) Priority: **07.07.92 US 909931**
**20.03.92 US 854924**

(43) Date of publication of application:
**18.11.93 Bulletin 93/46**

(84) Designated Contracting States:
**AT BE CH DE DK ES FR GB GR IE IT LI LU MC NL PT SE**

(71) Applicant: **ROHM AND HAAS COMPANY**
**Independence Mall West**
**Philadelphia Pennsylvania 19105(US)**

(72) Inventor: **Lai, Chung Yin**
**210 Sparango Lane**
**Plymouth Meeting, Pennsylvania 19462(US)**
Inventor: **Naples, John Otto**
**1570 Dreshertown Road**
**Dresher, Pennsylvania 19025(US)**

(74) Representative: **Angell, David Whilton et al**
**ROHM AND HAAS (UK) LTD.**
**European Operations Patent Department**
**Lennig House**
**2 Mason's Avenue**
**Croydon, Surrey, CR9 3NB (GB)**

(54) Dispersant polymethacrylate viscosity index improvers.

(57) This invention is concerned with copolymers derived from (a) one or more monomer selected from $(C_1-C_{24})$-alkyl methacrylates and $(C_1-C_{24})$alkyl acrylates, and (b) one or more monomer selected from hydroxy$(C_2-C_6)$-alkyl methacrylates and hydroxy$(C_2-C_6)$alkyl acrylates, and wherein the number of carbon atoms in the alkyl groups averages from about 7 to about 12. These polymers are useful as additives to lubricating oils for providing viscosity index improvement, dispersancy and low temperature fluidity properties without adversely affecting fluoropolymer seals and gaskets.

This invention is concerned with polymers derived from (a) one or more monomers selected from $(C_1-C_{24})$alkyl methacrylates and $(C_1-C_{24})$alkyl acrylates, and (b) one or more monomers selected from hydroxy-$(C_2-C_6)$alkyl methacrylates and hydroxy$(C_2-C_6)$alkyl acrylates, wherein the number of carbon atoms in the alkyl groups averages from about 7 to about 12. These polymers are useful as additives to lubricating oils for providing viscosity index improvement, dispersancy and low temperature performance properties without adversely affecting fluoropolymer seals and gaskets. The novel polymers are normally dissolved or dispersed in refined mineral lubricating oil for eventual incorporation in a mineral or synthetic base oil.

Desirable lubricating oils for internal combustion engines, automatic transmission fluids and hydraulic fluids have relatively little change in viscosity over a wide range of temperatures, dispersant properties and good fluidity at low temperatures, including low pour point. Viscosity index (or VI) is a measure of the degree of viscosity change as a function of temperature; high viscosity index values indicate a smaller change in viscosity with temperature variation compared to low viscosity index values. Viscosity index improver additives having high viscosity index values coupled with good low temperature fluidity allow the oil to flow at the lowest possible temperature of operation, usually at engine start-up, and, as the temperature increases into the operating range, the viscosity remains at a level suitable for good performance.

Polymeric additives have been used to improve the performance of engine lubricating oils in regard to several of these properties. Polymers of alkyl acrylates or alkyl methacrylates have been used successfully as viscosity index improvers and pour point depressants. Enhanced dispersant properties may be introduced into the polymer compositions by using polar, particularly basic, comonomers, such as vinyl heterocycles (for example, N-vinylpyrrolidone, N-vinylimidazole, vinylpyridine and the like), dialkylaminoalkyl methacrylates, N,N-dialkylaminoalkyl methacrylamides and the like. However, grafting conditions needed to incorporate the nitrogen-containing basic comonomers very often introduce poor shear stability characteristics. In addition, viscosity index improvers containing nitrogen-containing basic comonomers may cause objectionable odor or degrade the effectiveness of gaskets and seals found in automobile engines that are based on fluoropolymers, such as Viton fluoroelastomer.

US-A-3,311,597 discloses an approach to improved viscosity index and dispersant properties of poly-(methacrylate) polymers which involves the copolymerization of alkyl methacrylates with tetrahydrofurfuryl methacrylate and the optional incorporation of hydroxyethyl methacrylate, hydroxypropyl methacrylate, N-vinyl pyrrolidone or *t*-butylaminoethyl methacrylate. Poly(alkylmethacrylate) polymers having improved pour point properties based on copolymerizing alkyl methacrylates with from 9 to 23 mole percent methacrylic acid followed by ethoxylation, wherein the average number of carbon atoms in the alkyl group is 12.5 to 14.3, are disclosed in US-A-3,598,737. A lauryl methacrylate-stearyl methacrylate copolymer with 23 mole percent hydroxyethyl methacrylate is disclosed in US-A-3,249,545 for use in oil formulations containing bisphenol antioxidants.

In another approach to providing dispersant viscosity index improvers, EP-A-418610 discloses the use of polyalkyl(meth)acrylates characterized in that 80-95.5% by weight of the copolymer is derived from $(C_6-C_{24})$alkyl(meth)acrylates and 0.5-20% is derived from a hydroxy$(C_2-C_6)$alkyl(meth)acrylate or a multialkoxylized alkyl-(meth)acrylate with an optional 0-17% by weight being derived from $(C_1-C_5)$alkyl-(meth)-acrylates.

Poly(methacrylate) polymers as additives for machine tool working oils based on 92-99% $(C_1-C_{18})$alkyl methacrylate and 1-8% hydroxy$(C_2-C_3)$alkyl methacrylate polymers having number-average molecular weights $(M_n)$ of 20,000-60,000 are disclosed in Japanese Patent JP 52-018202B. These polymeric additives are disclosed as being unsuitable for use as dispersant viscosity index improver additives for engine oils.

None of these latter approaches combines dispersancy, good viscosity index and compatibility with fluoropolymer sealing materials with good low-temperature fluidity in a single polymer. The present invention enables this combination of properties to be provided in a single polymer.

According to the present invention there is provided a polymer obtainable by polymerizing monomers comprising:

(a) from about 90 to about 98 weight percent of one or more monomer selected from $(C_1-C_{24})$alkyl methacrylates and $(C_1-C_{24})$alkyl acrylates; and

(b) from less than 10 to about 2 weight percent of one or more monomer selected from hydroxy$(C_2-C_6)$-alkyl methacrylates and hydroxy-$(C_2-C_6)$alkyl acrylates; and wherein the number of carbon atoms in the alkyl groups averages from about 7 to about 12.

These polymers are useful as additives to lubricating oils for providing viscosity index improvement, dispersancy and low temperature performance properties without adversely affecting fluoropolymer seals and gaskets. The novel polymers, when used in lubricating oils, are normally dissolved or dispersed in refined mineral lubricating oil for eventual incorporation in a mineral or synthetic base oil. Examples of lubricating oils include crankcase engine oils, automatic transmission fluids, hydraulic fluids, gear oils and shock absorber fluids.

Each of the monomers used in the present invention can be a single monomer or a mixture having different numbers of carbon atoms in the alkyl portion. The alkyl portion of both the (a) methacrylate and acrylate monomers and the (b) hydroxyalkyl methacrylate and acrylate monomers is an important factor in the performance characteristics of the polymers of the invention. By this is meant that the average number (n) of carbon atoms ($C_n$) in the side chain alkyl and hydroxyalkyl groups of the acrylate or methacrylate backbone polymer is selected to maximize viscosity index characteristics and to maintain oil solubility of the polymer additive in both new oil and in used oil, where the additive has already functioned as a sludge dispersant. Generally, when the average $C_n$ is less than about 7, the resultant polymers may have poor solubility in the base oils and the additives may not be fully functional as dispersant viscosity index improvers. When the average $C_n$ is significantly greater than about 12, poorer low temperature fluidity properties may be observed. By low temperature is meant temperatures below about -5°C. Consequently, the average number of carbon atoms in the alkyl group of the acrylate or methacrylate monomers used to prepare the polymeric additives is from about 7 to about 12, preferably from about 7 to about 10, and more preferably from about 8 to about 10. In the instance where the monomers are all acrylates or substantially all acrylates, then the average carbon number of the side chain alkyl groups of the backbone polymer will vary somewhat and the average number of carbon atoms will be that which matches the solubility parameters of the corresponding methacrylate backbone polymers. Such solubility parameters are readily known and understood by those in the art.

Preferably, monomer (a) is selected from ($C_1$-$C_{20}$)alkyl methacrylates and ($C_1$-$C_{20}$)alkyl acrylates and monomer (b) is selected from hydroxy($C_2$-$C_6$)alkyl methacrylates and hydroxy($C_2$-$C_6$)alkyl acrylates. The alkyl portion of either monomer may be linear or branched. Alkyl methacrylates and hydroxyalkyl methacrylates are preferred.

To obtain a balance of desired performance characteristics relating to viscosity index improvement, good dispersancy and low temperature performance, mixtures of alkyl methacrylates and/or alkyl acrylates are preferably used. Consequently, in one embodiment of the invention, monomer (a) generally comprises (i) 0 to about 40% of an alkyl methacrylate or alkyl acrylate in which the alkyl group contains from 1 to 6 carbon atoms, or mixture thereof, (ii) from about 30 to about 90% of an alkyl methacrylate or alkyl acrylate in which the alkyl group contains from 7 to 15 carbon atoms, or mixture thereof, and (iii) 0 to about 40% of an alkyl methacrylate or alkyl acrylate in which the alkyl group contains from 16 to 24 carbon atoms, or mixture thereof, and monomer (b)comprises from less than 10 to about 2% of a hydroxyalkyl methacrylate or hydroxyalkyl acrylate in which the alkyl group contains 2 to 6 carbon atoms and is substituted with one or more hydroxyl groups, or mixture thereof. All percentages are by weight, are based on the total weight of the polymer, and the total of (i), (ii), (iii) and (b) equals 100 percent of the weight of the polymer. The amount of (i) in the polymer is preferably from 0 to about 25%, and more preferably from 5 to about 15%; the amount of (ii) is preferably from about 45 to about 85%, and more preferably from about 50 to about 60%; the amount of (iii) is preferably from about 5 to about 35%, and more preferably from about 25 to about 35%; and the amount of (b) is preferably from about 4 to about 8%, and more preferably about 5 to about 6%.

A portion of the total weight of the monomers (a) and (b) may be from about 5 to about 40 weight per cent of ($C_{16}$-$C_{24}$)alkyl methacrylates, ($C_{16}$-$C_{24}$)alkyl acrylates, or mixtures thereof. Preferably a portion of the total weight monomers (a) and (b) is from about 5 to about 35 weight per cent of ($C_{16}$-$C_{20}$) of methacrylates, ($C_{16}$-$C_{20}$)alkyl acrylates, or mixtures thereof.

Examples of monomer (a), the alkyl methacrylate and/or alkyl acrylate where the alkyl group contains from 1 to 6 carbon atoms, also called the "low-cut" alkyl methacrylate or alkyl acrylate, are methyl methacrylate (MMA), methyl and ethyl acrylate, propyl methacrylate, butyl methacrylate (BMA) and acrylate (BA), isobutyl methacrylate (IBMA), hexyl and cyclohexyl methacrylate, cyclohexyl acrylate, and combinations thereof. Preferred low-cut alkyl methacrylates are methyl methacrylate and butyl methacrylate.

Examples of monomer (a), the alkyl methacrylate and/or alkyl acrylate where the alkyl group contains from 7 to 15 carbon atoms, also called the "mid-cut" alkyl methacrylates or alkyl acrylates, are 2-ethylhexyl acrylate (EHA), 2-ethylhexyl methacrylate, octyl methacrylate, decyl methacrylate, isodecyl methacrylate (IDMA, based on branched ($C_{10}$)alkyl isomer mixture), undecyl methacrylate, dodecyl methacrylate (also known as lauryl methacrylate), tridecyl methacrylate, tetradecyl methacrylate (also known as myristyl methacrylate), pentadecyl methacrylate, and combinations thereof. Also useful are: dodecyl-pentadecyl methacrylate (DPMA), a mixture of linear and branched isomers of dodecyl, tridecyl, tetradecyl and pentadecyl methacrylates; and lauryl-myristyl methacrylate (LMA), a mixture of dodecyl and tetradecyl methacrylates. The preferred mid-cut alkyl methacrylates are laurylmyristyl methacrylate and isodecyl methacrylate.

Examples of monomer (a), the alkyl methacrylate and/or alkyl acrylate where the alkyl group contains from 16 to 24 carbon atoms, also called the "high-cut" alkyl methacrylates or alkyl acrylates, are hexadecyl methacrylate, heptadecyl methacrylate, octadecyl methacrylate, nonadecyl methacrylate, cosyl methacrylate, eicosyl methacrylate, and combinations thereof. Also useful are: cetyl-eicosyl methacrylate (CEMA), a mixture of hexadecyl, octadecyl, cosyl and eicosyl methacrylate; and cetyl-stearyl methacrylate (SMA), a mixture of hexadecyl and octadecyl methacrylate. The preferred high-cut alkyl methacrylates are cetyl-eicosyl methacrylate and cetyl-stearyl methacrylate.

The mid-cut and high-cut alkyl methacrylate and alkyl acrylate monomers described above are generally prepared by standard esterification procedures using technical grades of long chain aliphatic alcohols, and these commercially available alcohols are mixtures of alcohols of varying chain lengths containing between 10 and 15 or 16 and 20 carbon atoms in the alkyl group. Consequently, for the purposes of this invention, alkyl methacrylate is intended to include not only the individual alkyl methacrylate product named, but also to include mixtures of the alkyl methacrylates with a predominant amount of the particular alkyl methacrylate named. The use of these commercially available alcohols to prepare acrylate and methacrylate esters results in the LMA, DPMA, SMA and CEMA monomer mixtures described above.

Examples of monomer (b) are those alkyl methacrylate and acrylate monomers with one or more hydroxyl groups in the alkyl radical, especially those where the hydroxyl group is found at the $\beta$-position (2-position) in the alkyl radical. Hydroxyalkyl methacrylate and acrylate monomers in which the substituted alkyl group is a $(C_2$-$C_6)$alkyl, branched or unbranched, are preferred. Among the hydroxyalkyl methacrylate and acrylate monomers suitable for use in the present invention are 2-hydroxyethyl methacrylate (HEMA), 2-hydroxyethyl acrylate, 2-hydroxypropyl methacrylate, 1-methyl-2-hydroxyethyl methacrylate, 2-hydroxypropyl acrylate, 1-methyl-2-hydroxyethyl acrylate, 2-hydroxybutyl methacrylate and 2-hydroxybutyl acrylate. The preferred hydroxyalkyl methacrylate and acrylate monomers are HEMA, 1-methyl-2-hydroxyethyl methacrylate and 2-hydroxypropyl methacrylate. A mixture of the latter two monomers is commonly referred to as "hydroxypropyl methacrylate" or HPMA, which is a more preferred hydroxyalkyl methacrylate as are each of the components of the HPMA.

Among the hydroxyalkyl methacrylate and acrylates monomers of interest, preferred are those monomers which are essentially free of crosslinker or crosslinker precursor impurities and contaminants which may be present as a result of the method of preparation of the monomer. By crosslinker is meant any polyfunctional material which causes crosslinking of the polymer, such as ethylene glycol dimethacrylate. The presence of these crosslinker materials detracts from properties of the additives of the invention due to gel formation and related problems. Preferred hydroxyalkyl methacrylate and acrylates are those containing less than about 0.5%, more preferably less than about 0.2%, and most preferably about 0.1% or less, by weight of crosslinker or crosslinker precursor materials. In one embodiment of the invention monomer (b) is selected from hydroxy $(C_2$-$C_6)$ alkyl methacrylates containing less than about 0.2% by weight of crosslinker or crosslinker precursor materials. In a further embodiment of the invention monomer (b) is a mixture of 2-hydroxypropyl methacrylate and 1-methyl-2-hydroxyethyl methacrylate containing less than about 0.1% by weight of crosslinker or crosslinker precursor materials.

Preferred polymers are those where monomer (a) comprises monomers wherein (i) is selected from one or more of methyl meth-acrylate, butyl methacrylate and isobutyl methacrylate, (ii) is selected from one or more of 2-ethylhexyl methacrylate, isodecyl methacrylate, dodecyl-pentadecyl methacrylate and lauryl-myristyl methacrylate, (iii) is selected from one or more of cetyl-stearyl methacrylate and cetyl-eicosyl methacrylate, and monomer (b)is selected from one or more of 2-hydroxyethyl methacrylate, 2-hydroxyethyl acrylate, 2-hydroxypropyl methacrylate, 1-methyl-2-hydroxyethyl methacrylate, 2-hydroxypropyl acrylate, 1-methyl-2-hydroxyethyl acrylate, 2-hydroxybutyl methacrylate and 2-hydroxybutyl acrylate.

A preferred polymer is one in which monomer (a) is about 10% methyl methacrylate, about 55% isodecyl methacrylate and about 30% cetyl-stearyl or cetyl-eicosyl methacrylate, and monomer (b) is about 5% of a mixture of 2-hydroxypropyl methacrylate and 1-methyl-2-hydroxyethyl methacrylate is present in an amount of about 5%.

Another preferred polymer is one in which monomer (a) is about 20% butyl or isobutyl methacrylate, about 45% isodecyl methacrylate and about 30% of a monomer selected from cetyl-stearyl and cetyl-eicosyl methacrylate, and monomer (b) is about 5% of a mixture of 2-hydroxypropyl methacrylate and 1-methyl-2-hydroxyethyl methacrylate.

Another preferred polymer is one in which monomer (a) is about 15% of a monomer selected from butyl and isobutyl methacrylate, and about 80% of a monomer selected from lauryl-myristyl and dodecyl-pentadecyl methacrylate, and monomer (b) is about 5% of a mixture of 2-hydroxypropyl methacrylate and 1-methyl-2-hydroxyethyl methacrylate.

Another preferred polymer is one in which monomer (a) is about 5 to about 10% methyl methacrylate, about 85 to about 90% of a monomer selected from lauryl-myristyl, isodecyl or dodecyl-pentadecyl methacrylate, and 0 to about 5% cetyl-eicosyl methacrylate, and (b) is about 5% of a mixture of 2-hydroxypropyl and 1-methyl-2-hydroxyethyl methacrylate.

A polymer composition which is particularly preferred for use in automatic transmission fluids is one in which the additive is polymerized from monomers in which monomer (a) is 0 to about 5% methyl methacrylate, about 80 to about 90% lauryl-myristyl methacrylate and 0 to about 10% cetyl-eicosyl methacrylate, and monomer (b) is about 5% of a mixture of 2-hydroxypropyl methacrylate and 1-methyl-2-hydroxyethyl methacrylate.

Another preferred polymer composition for use in automatic transmission fluids is one in which the additive is polymerized from monomers in which monomer (a) is 0 to about 20% butyl methacrylate, about 65 to about 90% lauryl-myristyl methacrylate and 0 to about 10% cetyl-eicosyl meth-acrylate, and monomer (b) is about 5% of a mixture of 2-hydroxypropyl methacrylate and 1-methyl-2-hydroxyethyl methacrylate.

Besides the average number (n) of carbon atoms ($C_n$) in the side chain alkyl and hydroxyalkyl groups of the acrylate or methacrylate backbone polymer, the nature of the alkyl portion of the methacrylate and acrylate monomers is an important factor in the performance characteristics of the polymers of the invention. For example, a mix of ($C_1$-$C_6$)alkyl methacrylates and/or acrylates, ($C_7$-$C_{15}$)alkyl methacrylates and/or acrylates and ($C_{16}$-$C_{24}$)alkyl methacrylates and/or acrylates may be copolymerized with hydroxyalkyl(meth)acrylate such that the polymer has an average carbon number content in the alkyl side chains of about 9. In this case there is a good balance of viscosity index properties and solubility in base oils; in addition, the ($C_{16}$-$C_{24}$)alkyl(meth)acrylate portion of the polymer is wax-like and will interact with the waxy components in the base oil resulting in improved low-temperature properties, e.g., pour point, low temperature pumpability and cold-cranking engine startup. If, on the other hand, a single ($C_{10}$) or ($C_{12}$)alkyl-(meth)acrylate monomer is copolymerized with hydroxyalkyl methacrylate to provide an average carbon number in the alkyl side chains of about 9, the resulting polymer additive would have satisfactory oil solubility but little wax interaction capability resulting in poorer low-temperature properties, such as poorer pumpability due to viscosity buildup, even though the $C_n$ values are similar for both types of polymer.

Consequently, to obtain good low temperature performance properties, while retaining a good balance of viscosity index properties and solubility in base oils, it is preferred that a portion of monomer (a) comprise from about 5 to about 40, preferably from about 5 to about 35, and more preferably from about 25 to about 35, weight percent of ($C_{16}$-$C_{24}$)alkyl methacrylates and/or ($C_{16}$-$C_{24}$)alkyl acrylates, preferably wherein the alkyl portion is $C_{16}$ to $C_{20}$. Low temperature performance refers to viscosity under high shear and low shear conditions. For example, cold cranking startup of an engine, as measured by CCS (Cold-Cranking Simulator) viscosity, relates to viscosity at high shear conditions. On the other hand, pumpability of an oil at low temperatures, as measured by the mini-rotary viscometer (MRV), relates to viscosity under low shear conditions. Since the high-cut alkyl methacrylate and acrylates are wax-like, they act as pour point depressants changing the structure or morphology of the wax in the base oil at low temperatures. The amount of the high-cut alkyl methacrylate or acrylate used is dependent upon the particular high-cut alkyl methacrylate or acrylate selected, the properties of the base oil and the desired low temperature properties. Generally, the greater the number of carbons in the alkyl portion, the more wax-like properties the monomers have and less of this monomer is used. Since these high-cut alkyl(meth)acrylates are wax-like, too much can cause congealing in the base oil and loss of low temperature fluidity.

The optimization of the ratio of the high-, mid- and low-cut alkyl(meth)acrylates is dependent on the base oils used in the formulation and the level of performance desired. Once the high-cut monomer is optimized, then the mid- and low-cut monomer ratios are balanced to give optimum viscosity index and solubility. The balanced formulation will preferably have an alkyl carbon content ($C_n$) of from about 8 to about 10.

Thus, within the preferred ranges for the various monomers, including the hydroxyalkyl methacrylate and acrylate monomers, and the average number of carbon atoms in the side chain alkyl groups of the backbone polymer, the addition of a polymer of the present invention can result in an engine oil formulation exhibiting the viscosity and low temperature fluidity properties of an oil a full viscosity grade lower. For example, an SAE 10W-30 oil would meet the pumpability requirements of an SAE 5W-30 oil.

Within these preferred ranges, the polymers of the present invention also provide a lower CCS viscosity while maintaining good low temperature pumpability (measured by MRV) of lubricating oils, thus allowing the use of base oils having higher viscosities. Consequently, the polymers of the invention allow more extensive use of these heavier base oils in formulated oils, resulting in lower costs, reduced oil consumption and also cleaner engines since these heavier base oils are less volatile than lighter viscosity base oils and reduce piston deposit formation at high operating temperatures, particularly in diesel engines.

In order to achieve the combination of polymer solubility, viscosity index, dispersancy and low temperature properties (such as pour point and cold-cranking engine startup performance) of polymers of the present invention, use levels of low-cut $(C_1-C_3)$alkyl(meth)acrylates, such as methyl methacrylate, may be from zero to about 25%, typically from about 5 to about 15%, by weight of the polymer. Polymer solubility refers to the property in which the more hydrophilic or polar monomers, such as those having a low carbon content $(C_1-C_3)$ in the alkyl portion, provide a polymer that is less soluble in the base oils than polymers from the more hydrophobic monomers, such as those having a high carbon content ($C_4$ or greater) in the alkyl chain. Therefore, if greater than about 10% methyl methacrylate is incorporated into some polymers, depending upon the level of other polar monomers used, e.g., hydroxyalkyl methacrylate, solubility in some base oils may be insufficient for the additive to be fully functional as a dispersant viscosity index improver. On the other hand, if low-cut $(C_4-C_6)$alkyl(meth)acrylates are used, such as butyl methacrylate or isobutyl methacrylate, then zero to about 40% by weight, preferably 20 to 35%, of these monomers may be used to provide an optimum balance of the aforementioned properties, including solubility in the base oils.

The weight-average molecular weight $(M_w)$ of the polymers of the present invention is not highly critical. It must be sufficient to impart the desired viscosity properties to the lubricating oil. As the weight-average molecular weights of the polymers increase, they become more efficient thickeners; however, they can undergo mechanical degradation in particular applications. Thus, the $M_w$ is ultimately governed by thickening efficiency, cost and the type of application. In general, polymeric lubricating oil additives of the present invention have $M_w$ from about 100,000 to about 1,000,000 (as determined by gel permeation chromatography (GPC), using poly(alkylmethacrylate) standards); preferably, $M_w$ is in the range from about 300,000 to about 800,000 in order to satisfy the particular use application of the oil, e.g., engine oil and automatic transmission fluid. Weight-average molecular weights of from about 100,000 up to about 300,000 are preferred for hydraulic fluids, gear oils and the like.

Those skilled in the art will recognize that the molecular weights set forth throughout this specification are relative to the methods by which they are determined. For example, molecular weights determined by gel permeation chromatography (GPC) and molecular weights calculated by other methods, may have different values. It is not molecular weight *per se* but the handling characteristics and performance of a polymeric additive (shear stability and thickening power under use conditions) that is important. Generally, shear stability is inversely proportional to molecular weight and use of a very shear stable additive will require more polymer to obtain good thickening.

The shear stability index (SSI) can be directly correlated to polymer molecular weight and is a measure of the percent loss in polymeric additive-contributed viscosity due to shear and can be determined by measuring sonic shear stability according to ASTM D-2603-91 (published by the American Society for Testing and Materials). In general, higher molecular weight polymers undergo the greatest relative reduction in molecular weight when subjected to high shear conditions and, therefore, these higher molecular weight polymers also exhibit the largest SSI values. The SSI range for the polymers of this invention is from about 10 to about 75%, preferably from about 10 to about 25% for low molecular weight polymers and from about 30 to about 50% for high molecular weight polymers. The desired SSI can be achieved by either varying the reaction conditions or by mechanically shearing the known molecular weight product polymer.

Representative of the types of shear stability that are observed for lubricating oil additives of different weight-average molecular weights $(M_w)$ are the following: conventional poly(methacrylate) additives having $M_w$ of 130,000, 490,000 and 880,000, respectively, would have SSI values (210°F) of 0,5 and 20%, respectively, based on a 2000 mile road shear test for engine oil formulations; based on a 20,000 mile high speed road test for automatic transmission fluid (ATF) formulations, the SSI values (210°F) were 0,35 and 50%, respectively; and based on a 100 hour ASTM D-2882-90 pump test for hydraulic fluids, the SSI values (100°F) were 18, 68, and 76%, respectively (*Effect of Viscosity Index Improver on In-Service Viscosity of Hydraulic Fluids*, R.J. Kopko and R.L. Stambaugh, **Fuel and Lubricants Meeting**, Houston, Texas, June 3-5,1975, Society of Automotive Engineers).

The polydispersity index of the oil-soluble polymers of the present invention may be from 1.5 to about 15, preferably from 2 to about 4. The polydispersity index $(M_w/M_n)$ is a measure of the narrowness of the molecular weight distribution with a minimum value of 1.5 and 2.0 for polymers involving chain termination via combination and disproportionation, respectively, and higher values representing increasingly broader distributions. It is preferred that the molecular weight distribution be as narrow as possible, but this is generally limited by the method of manufacture. Some approaches to providing narrow molecular weight distributions (low $M_w/M_n$) may include one or more of the following methods: anionic polymerization; continuous-feed-stirred-tank-reactor (CFSTR) technology; low-conversion polymerization; control of temperature, etc., during polymerization; mechanical shearing, e.g., homogenization, of the polymer; and the like.

Polymers of the present invention having a polydispersity index from 2 to about 4 are preferred because these polymers allow more efficient use of the additive to satisfy a particular formulated engine oil viscosity specification, e.g., about 5 to 10% less additive may be required to produce a viscosity of about 9 x $10^{-3}$ to about 2x $10^{-2}$ Pa S (about 9 to about 20 centipoise) (at 100°C) in a 100N base oil compared to an additive having a polydispersity index of about 10.

Thus, a fully effective polymer additive should provide a balance of shear stability and thickening ability at low usage levels, impart low temperature fluidity without detracting from other properties, such as dispersancy, and be chemically neutral to fluoropolymer seals and gaskets. Typically, these performance properties in engine oils, automatic transmission fluid formulations and the like, were previously only achieved by mixing two, three or more different additives, i.e., using separate dispersant, viscosity index improver, and pour point depressant additives. The additives of the present invention provide this combination of performance properties in a single polymer.

The polymers of this invention may be prepared by mixing monomers (a) and (b) in the presence of a polymerization initiator, a diluent and optionally a chain transfer agent. The reaction can be run under agitation in an inert atmosphere at a temperature of from about 60 to 140°C and more preferably from 115 to 125°C. Typically, the batch will exotherm to the polymerisation temperature of 115-120°C. The reaction is run generally for about 4 to 10 hours or until the desired degree of polymerization has been reached. As is recognized by those skilled in the art, the time and temperature of the reaction are dependent on the choice of initiator and can be varied accordingly.

Initiators useful for this polymerization are any of the well known free-radical-producing compounds such as peroxy, hydroperoxy and azo initiators including acetyl peroxide, benzoyl peroxide, lauroyl peroxide, *t*-butyl peroxyisobutyrate, caproyl peroxide, cumene hydroperoxide, 1,1-di(*t*-butylperoxy)-3,3,5-trimethylcyclohexane, azobisisobutyronitrile and *t*-butyl peroctoate. The initiator concentration is normally between 0.025 and 1% by weight based on the total weight of the monomers and more preferably from 0.05 to 0.25%. Chain transfer agents may also be added to the polymerization reaction to control the molecular weight of the polymer. The preferred chain transfer agents are alkyl mercaptans such as lauryl (dodecyl) mercaptan, and the concentration of chain transfer agent used is from 0 to about 0.5% by weight.

Among the diluents suitable for the polymerization are aromatic hydrocarbons, such as benzene, toluene, xylene, and aromatic naphthas, chlorinated hydrocarbons such as ethylene dichloride, esters such as ethyl propionate or butyl acetate, and also petroleum oils or synthetic lubricants.

After the polymerization, the resultant polymer solution typically has a polymer content of between about 50 to 95% by weight. The polymer can be isolated and used directly in mineral or synthetic base oils or the polymer and diluent solution can be used in a concentrate form. When used in the concentrate form the polymer concentration can be adjusted to any desirable level with additional diluent (e.g. paraffinic base oil). The preferred concentration of polymer in the concentrate is from 30 to 70% by weight. When the concentrate is directly blended into a lubricating base oil, the more preferred diluent is any mineral oil, such as 100 to 150 neutral oil (100N or 150N oil), which is compatible with the final lubricating base oil.

When a polymer of the present invention is added to lubricating base oils, such as automatic transmission fluids, hydraulic fluids and engine oils, whether it is added as pure polymer or as concentrate, the final concentration of the polymer in the lubricating base oil is preferably from about 0.5 to 15% by weight, and more preferably from about 1 to 8%, depending on the specific use application requirements. For example, about 1.5 to about 5% in engine oils, automatic transmission and shock absorber fluids, and up to as much as 10 to 15% in special application gear oils and hydraulic fluids. Lubricating base oils may be either mineral oil types (paraffinic or naphthenic) or synthetic types (polyolefin). The concentration of polymer used is dependent on the desired viscometric properties of the lubricating oil and the severity of shear in the intended application; generally, if a low molecular weight polymer is used, a higher concentration is necessary to achieve adequate thickening in the blend, and if a high molecular weight polymer is used, a lower concentration can be used in the oil.

The polymers of the present invention have been evaluated by a wide variety of performance tests commonly used for lubricating oils and they are discussed below.

Engine oils containing viscosity index improvers generally have viscosity index (VI) values in the range of 120 to about 230, values greater than about 140 being preferred depending upon the blend specifications. The higher the value, the less the change in viscosity as the temperature is raised or lowered. Viscosity index improver compositions of the present invention offer high viscosity index values (Example 4) while maintaining good dispersancy (Example 5), good cold-cranking engine startup (Example 7) and good chemical neutrality towards fluoropolymer seal materials (Example 6).

Performance characteristics of lubricating oil additives of the present invention were also evaluated for engine cleanliness in the Sequence VE Test, which measures the sludge dispersant characteristics of additives under low and medium temperature operating conditions according to the conditions described in ASTM Research Report No. D-2:1002. The engine parts were evaluated and rated at the end of 12 days and cleanliness was rated according to a Coordinating Research Council (CRC) merit system with a value of 10 representing the cleanest engine; target values for average sludge and for rocker arm cover (RAC) sludge are greater than 9.00 and 7.00, respectively.

Compositions of the present invention were also subjected to a compatibility test for fluorohydrocarbon polymers, in particular, Viton fluoroelastomers. This test (Engine Seal Compatibility Test, Example 6) was used to evaluate the degree of compatibility of the lubricating oil additives of the present invention with materials used in engine seals, gaskets, etc. The test is based on the immersion of seal or gasket materials in fluids containing candidate lubricating oil additive samples for 7 days, after which their elongation characteristics (percent elongation-at-break or %ELB) were determined. Values of the relative change in %ELB of zero to -5% were representative of neutral conditions, i.e., compatible with the engine seals.

Compositions of the present invention were subjected to tests designed to measure viscosity performance at low temperatures at low and high shear rates, i.e., according to the SAE J300 Engine Oil Viscosity Classification, January, 1991. In these circumstances the viscosity of the formulated oil should be low enough to allow sufficient cranking speed for startup of the engine while providing adequate lubrication of all engine parts.

The Cold-Cranking Simulator (CCS) test estimates the apparent viscosity of engine oils under conditions where engine cranking and startup is most difficult and is based on the procedure defined in ASTM D-5293-92. For example, the CCS viscosity specification for an SAE 5W-30 grade oil is less than 3.5 Pa S (35 poise) at -25°C and it is difficult to satisfy this requirement with many of the commercially available viscosity index improvers.

The mini-rotary viscometer (MRV) test procedure measures low-temperature low-shear performance at engine startup. The MRV test (Example 8) is a measure of the pumpability of an engine oil, i.e., the engine oil must be fluid enough so that it can be pumped to all engine parts after engine startup to provide adequate lubrication. Dispersant viscosity index improvers of the present invention offer good low-temperature performance when formulated in a wide range of different base oils.

The following Examples are presented to illustrate preferred embodiments of the present invention. All ratios and percentages are by weight, and all reagents are of good commercial quality unless otherwise indicated. Examples 1 through 3 give synthesis information for preparing polymers of the present invention and Examples 4 through 7 give performance data on oil formulations containing polymers of the invention.

## EXAMPLE 1

A monomer mix was prepared from 30.0 parts cetyl-eicosyl methacrylate (100% basis, 95% purity), 55.0 parts isodecyl methacrylate (100% basis, 98% purity), 10.0 parts methyl methacrylate, 5.0 parts hydroxypropyl methacrylate, 0.06 parts dodecyl mercaptan, and 0.10 parts 1,1-di(*t*-butylperoxy)-3,3,5-trimethylcyclohexane. A heel charge was prepared from 20.0 parts paraffinic oil base stock (100N oil) and 0.028 parts 1,1-di(*t*-butylperoxy)-3,3,5-trimethylcyclohexane. The heel charge was then charged to a nitrogen flushed kettle fitted with a thermometer and Thermowatch to control temperature, a water-cooled reflux condenser with nitrogen outlet, a stirrer, a nitrogen inlet, and an addition funnel to control the addition of the monomer mix. The contents of the flask were heated to 120°C and held there. The monomer mix (100 parts) was then added uniformly over a 90 minute period and heating or cooling was applied as needed to maintain the polymerization temperature at 115-120°C.

Twenty minutes after the end of the monomer feed, the first of three delayed initiator shots, each containing 0.10 parts of 1,1-di(*t*-butyl-peroxy)-3,3,5-trimethyl-cyclohexane in 10.0 parts paraffinic base oil, were added. The other two initiator shots were added at twenty minute intervals. Twenty minutes after the last initiator addition, about 62 parts of paraffinic base oil was added to bring the batch to a theoretical solids of 50% polymer in oil. Throughout the polymerization, the batch temperature was maintained at 115-120°C. Thirty minutes after the addition of the paraffinic base oil, the batch was homogeneous and the polymerization was considered complete. The conversion of monomer to polymer was about 95% and the polymer had a shear stability index (SSI) of 45 (according to ASTM D-2603-91).

## EXAMPLE 2

The same procedure as Example 1 was followed except the monomer mix was 145 parts cetyl-eicosyl methacrylate, 225 parts isodecyl methacrylate, 99 parts butyl methacrylate, 24 parts hydroxypropyl methacrylate and 0.19 parts cumene hydroperoxide. The heel charge was 106 parts paraffinic base oil containing 0.1 gram cumene hydroperoxide and 0.83 parts of 25% tallow-*t*-octylphenyldimethyl-ammonium chloride in mixed butanols. Also, the three delayed initiator shots were added at 30 minute intervals and each consisted of 0.13 parts of cumene hydroperoxide and 0.83 parts of 25% tallow-*t*-octylphenyldimethylammonium chloride in mixed butanols in 3.6 parts paraffinic base oil. The batch had a theoretical solids of 52% polymer. The conversion of monomer to polymer was about 93% and the polymer had an SSI of 73.3.

## EXAMPLE 3

A monomer mix was prepared from 5.0 parts cetyl-eicosyl methacrylate (100% basis, 95% purity), 85.0 parts isodecyl methacrylate (100% basis, 95% purity), 5.0 parts methyl methacrylate, 5.0 parts hydroxypropyl methacrylate, 0.29 parts dodecyl mercaptan, 0.13 parts *t*-butyl peroctoate (*t*-butyl peroxy-2-ethylhexanoate) and 4.9 parts paraffinic base oil (100N oil). Part of the above monomer mix (40%) was charged to a nitrogen flushed kettle fitted with a thermometer and Thermowatch to control temperature, a water-cooled reflux condenser with nitrogen outlet, a stirrer, an nitrogen inlet, and an addition funnel to control the addition of the monomer mix. The contents of the kettle were heated to 105°C and allowed to exotherm to 130°C before controlling by cooling to maintain the temperature below 130°C; if the exotherm had not started after about 5 minutes at 105°C, the batch was heated slowly to 115-120°C until the exotherm started. When the temperature reached 115°C during the exotherm the remainder of the monomer mix was then added uniformly over a 45 minute period with cooling to control the exotherm below 125°C. The temperature was then maintained at 115-120°C for an additional 30 minutes. At this point the first of three delayed initiator shots, each consisting of 0.10 parts *t*-butyl peroctoate in 9.8 parts 100N oil, was added to the kettle after which the batch was held at the same temperature for 30 minutes. Two additional initiator shots were made at thirty minute intervals. Thirty minutes after the last addition of initiator, approximately 65 parts of 100N base oil was added to dilute the batch to about 50% polymer. The batch temperature was then raised to 130°C and held there for 30 minutes. The final diluted polymer solution had an SSI of 13.2.

## EXAMPLE 4

Viscosity index (VI) is a measure of the effect of temperature change on the kinematic viscosity of an oil. Viscosity index is expressed as an arbitrary value based on a calculation according to ASTM method D-2270-74 from kinematic viscosity (centistokes) measured at 40°C and 100°C. Table 2 contains data on viscosity index improvers which have been formulated in two different base oils. Viscosity index improver (VII) compositions 1-2 represent poly(alkylmethacrylate) additives of the prior art which contain no hydroxyalkyl methacrylate monomer; VII compositions 3-7 are representative of the present invention based on poly(MMA/IDMA/CEMA/HPMA) with relative monomer contents of 9-10/53-56/28-30/4-6 parts by weight, respectively.

TABLE 1

| Viscosity Index Values | | | | | | | |
|---|---|---|---|---|---|---|---|
| VI I | %HPMA | Formulation 1 | | | Formulation 2 | | |
| | | 100° | 40° | VI | 100° | 40° | VI |
| 1 | 0 | 11.0 | 57.1 | 189 | 10.6 | 54.9 | 187 |
| 2 | 0 | 10.6 | 55.8 | 186 | 10.3 | 53.6 | 185 |
| 3 | 4 | 10.6 | 53.5 | 195 | 10.2 | 50.5 | 197 |
| 4 | 4 | 10.9 | 54.4 | 197 | 10.5 | 51.5 | 201 |
| 5 | 5 | 10.4 | 52.3 | 195 | 10.1 | 49.5 | 197 |
| 6 | 5 | 10.7 | 50.7 | 211 | 10.5 | 51.0 | 203 |
| 7 | 6 | 9.8 | 42.9 | 192 | 9.5 | 46.0 | 199 |

## EXAMPLE 5

Performance characteristics in the Sequence VE Test (engine cleanliness) of the lubricating oil additives of the present invention are presented in Table 3. The sludge values listed in Table 3 are for the rocker arm cover sludge and the average sludge (target values are greater than 7.0 and 9.0, respectively, with 10.0 representing the cleanest engine). Each of the formulations, M through S, contains 4-8% of the oil additive being tested, 8-10% of a commercial DI package, and 82-87% of a paraffinic base oil. Commercial DI packages typically consisted of an antiwear or antioxidant component, such as zinc dialkyl dithiophosphate; an ashless dispersant, such as polyisobutene based succinimide; a detergent, such as metal phenate or sulfonate; a friction modifier, such as sulfur-containing organic; and an antifoam agent such as silicone fluid: Hitec 993 is available from Ethyl Corporation and Amoco A-8004 is available from Amoco Chemicals. The oil additives tested were based on poly(MMA/IDMA/CEMA/HPMA) with relative monomer contents of 9-10/53-56/28-30/4-8 parts by weight, respectively. The paraffinic base oils used were Exxon 100N or 150N oils.

The compositions of the various formulations tested were:

M    4.7% additive/8% Hitec 993 DI package/87% 150N oil
N    4.5% additive/8% Hitec 993 DI package/87% 150N oil
O    6.9% additive/10% Amoco A-8004 DI package/83% 100N oil
P    6.7% additive/10% Amoco A-8004 DI package/83% 100N oil
Q    7.7% additive/10% Amoco A-8004 DI package/82% 100N oil
R    6.5% additive/10% Amoco A-8004 DI package/83% 100N oil
S    4.4% additive/10% Amoco A-8004 DI package/78% 100N oil/7% 150N oil

TABLE 2

| Sequence VE Test (Engine Cleanliness) | | |
|---|---|---|
| Formulation | % HPMA in Additive | Sludge (Rocker Arm Cov/Aver) |
| M | 5% | 9.3/9.4 |
| N | 5% | 9.3/9.1 |
| O | 5% | 9.4/9.4 |
| P | 5% | 9.2/9.4 |
| Q | 5% | 9.3/9.6 |
| R | 4% | 8.1/8.0 |
| S | 8% | 9.4/9.5 |

## EXAMPLE 6

Compositions of the present invention were subjected to a compatibility test (Engine Seal Compatibility Test) for fluorohydrocarbon polymers, in particular, Viton fluoroelastomers, used in engine seals, gaskets, etc. This test was conducted under conditions similar to those defined in the ISO-37-1977(E) procedure (developed by the technical committee of the International Organization for Standardization (ISO/TC45)) using a S3A dumb-bell shaped test specimen.

Evaluation was conducted as follows: in a beaker, three S3A dumb-bell shaped specimens made of Viton fluoroelastomer (AK6) were immersed in the test fluid such that 80 parts of test fluid were present per 1 part of test specimen (volume/volume). The test fluid contained 5% (weight) of the dispersant viscosity index improver composition to be tested together with an appropriate detergent-inhibitor (DI) package at a recommended use level in Exxon 150N oil. The beaker was then covered with a watch glass and placed in a forced-air oven maintained at 149-151°C. The test specimens were subjected to the above conditions for 7 days, after which they were removed, allowed to cool and then rinsed lightly with hexane to remove residual test fluid. The test specimens were then air-dried and the tensile strength and elongation characteristics (percent elongation-at-break or %ELB) were determined using a standard stress-strain measurement procedure at 14.61 cms (5.75 inches) per minute elongation rate. The change of elongation of Viton elastomer test specimens was then compared to the elongation data from untreated Viton elastomer samples and the result was expressed as a percentage:

$$\frac{[\%ELB_{treated} - \%ELB_{untreated}]}{[\%ELB_{untreated}]} \times 100 = \%ELB \text{ Change}$$

The more negative the value for %ELB Change, the greater the aggressiveness of the test fluid towards the Viton fluoroelastomer specimen. Under the test conditions described, fluids resulting in a reduction of more than 45% of the original (untreated) %ELB value (expressed as %ELB Change = -45%) were considered to be very aggressive towards the sample tested and, therefore, incompatible with the Viton fluoroelastomer engine seal. Values of %ELB Change of zero to -5% were representative of neutral conditions and, therefore, compatible with the engine seals. Values of %ELB Change of about -20% or less, i.e., more negative, indicated poor seal compatibility. The %ELB results are greatly affected by the manner in which the equipment is used and it is important to include comparative untreated sample results with each new set of immersion test samples.

Performance characteristics in the Engine Seal Compatibility Test of the lubricating oil additives of the present invention and those representing commercial nitrogen-containing oil additives are presented in Table 4. Samples of Viton fluoroelastomer were immersed in test fluids containing the additives listed. %ELB Change values are expressed as the average for three specimens tested in each fluid. In all cases the test fluids contained 1.5% OLOA 267 (component of commercial detergent-inhibitor (DI) package available from Chevron Chemicals).

A-Comparative:     Commercial poly(alkyl methacrylate) nitrogen-containing viscosity index improver

B-Comparative:     Commercial polyolefin nitrogen-containing viscosity index improver

Compositions C through H represent polymeric additives (monomer type and relative parts by weight indicated) of the present invention (MMA is methyl methacrylate, IDMA is isodecyl methacrylate, CEMA is cetyl-eicosyl methacrylate, LMA is lauryl-myristyl methacrylate, HPMA is hydroxypropyl methacrylate):

C     MMA/LMA/HEMA (8/88/4)
D     MMA/IDMA/CEMA/HPMA (10/56/30/4)
E     MMA/IDMA/CEMA/HPMA (10/56/30/4)
F     MMA/IDMA/CEMA/HPMA (10/56/29/5)
G     MMA/IDMA/CEMA/HPMA (10/56/29/5)
H     MMA/IDMA/CEMA/HPMA (9/53/29/9)

EP 0 569 639 A1

TABLE 3

| Engine Seal Compatibility Test | | |
|---|---|---|
| Additive | Type | %ELB Change |
| A-Comparative | Nitrogen-containing | -47 |
| B-Comparative | Nitrogen-containing | -39 |
| C | 4% HEMA | 0 |
| D | 4% HPMA | -2 |
| E | 4% HPMA | -1 |
| F | 5%HPMA | 3 |
| G | 5%HPMA | -2 |
| H | 9%HPMA | -3 |

## EXAMPLE 7

Performance characteristics in the Cold-Cranking Simulator (CCS) test for the lubricating oil additives of the present invention are presented in Table 5. Blends of the additives to be tested in a base oil were prepared by mixing 2.24% (active) of the polymer additive and 11.4% of DI package (available from Lubrizol Company as LZ-7838G) with a calculated amount of 100N oil. For example, if the polymer additive is available as 50% solids in 100N oil, then 4.48 parts of the polymer additive oil solution was mixed with 11.4 parts of LZ-7838G and 84.12 parts of 100N oil to produce the final oil composition to be tested. The CCS viscosity specification for an SAE 5W-30 grade oil is less than 3.5 Pa S (35 poise) at -25°C.

TABLE 4

| Cold-Cranking Simulator (CCS) Test | | | | | |
|---|---|---|---|---|---|
| Polymer Additive Composition | | | | CCS Viscosity Pa S (Poise) @ -25°C | |
| % MMA | % IDMA | % CEMA | % HPMA | | |
| 0 | 70 | 30 | 0 | 3.39 | (33.9) |
| 0 | 65 | 30 | 5 | 3.45 | (34.5) |
| 0 | 60 | 30 | 10 | 3.42 | (34.2) |
| 5 | 65 | 30 | 0 | 3.4 | (34.0) |
| 5 | 60 | 30 | 5 | 3.36 | (33.6) |
| 5 | 55 | 30 | 10 | 3.25 | (32.5) |
| 10 | 60 | 30 | 0 | 3.6 | (36.0) |
| 10 | 55 | 30 | 5 | 3.38 | (33.8) |
| 10 | 50 | 30 | 10 | 3.39 | (33.9) |

## EXAMPLE 8

Apparent viscosity by mini-rotary viscometer (MRV) was determined by two different test methods and is a measure of engine oil pumpability after cold-engine startup. ASTM D-3829-87 deals with viscosity measurement in the 0 to -40°C temperature range and describes the standard MRV test. ASTM D-4684-89 deals with viscosity measurement in the temperature range of -15° to -30°C and describes the TP-1 MRV test. Table 6 contains data for 2 sets of 5 different SAE 5W-30 oil formulations, using 5 different commercial base oils. One set uses a commercial poly(alkylmethacrylate) type nitrogen-containing viscosity index improver and the other set uses a poly(10 MMA/55 IDMA/30 CEMA/5 HPMA) additive composition of the present invention. SAE J300 Engine Oil Viscosity Classification (January 1991) allows a maximum of 30 Pa S (300 poise) at -30°C for SAE 5W-30 oil using the ASTM D-4684-89 test procedure.

12

TABLE 5

| MRV Pumpability Test | | | |
|---|---|---|---|
| Source of Viscosity Index Improver | Source of Base Oil | Viscosity at -30°C, Pa S (poise) | |
| | | TP-1 MRV | Std MRV |
| Commercial | A | 8.53 (85.3) | 7.41 (74.1) |
| Commercial | B | 7.84 (78.4) | 7.45 (74.5) |
| Commercial | C | 7.22 (72.2) | 6.67 (66.1) |
| Commercial | D | 6.42 (64.2) | 6.42 (64.2) |
| Commercial | E | 7.31 (73.1) | 7.12 (71.2) |
| Invention | A | 8.69 (86.9) | 6.78 (67.8) |
| Invention | B | 7.57 (75.7) | 7.35 (73.5) |
| Invention | C | 6.28 (62.8) | 6.35 (63.5) |
| Invention | D | 6.04 (60.4) | 5.72 (57.2) |
| Invention | E | 6.12 (61.2) | 6.37 (63.7) |
| A - Solvent-extracted 100N base oil | | | |
| B - Solvent-extracted, solvent dewaxed 100N base oil | | | |
| C - Hydrocracked, catalytically dewaxed 100N base oil | | | |
| D - Solvent extracted, solvent dewaxed 100N base oil | | | |
| E - Solvent extracted, hydrofinished, solvent dewaxed 100N base oil | | | |

"Viton", "Thermowatch", "Hitec", "Amoco" and "OLOA" are trademarks which may be registered in one or more of the designated countries.

**Claims**

1. A polymer obtainable by polymerizing monomers comprising:
   (a) from about 90 to about 98 weight percent of one or more monomer selected from $(C_1-C_{24})$alkyl methacrylates and $(C_1-C_{24})$alkyl acrylates; and
   (b) from less than 10 to about 2 weight percent of one or more monomer selected from hydroxy$(C_2-C_6)$alkyl methacrylates and hydroxy-$(C_2-C_6)$alkyl acrylates; and wherein the number of carbon atoms in the alkyl groups averages from about 7 to about 12.

2. A polymer as claimed in claim 1, wherein a portion of the total weight of monomers (a) and (b) is from about 5 to about 40 weight percent of $(C_{16}-C_{24})$alkyl methacrylates, $(C_{16}-C_{24})$alkyl acrylates, or mixtures thereof.

3. A polymer as claimed in claim 1, wherein the number of carbon atoms in the alkyl groups averages from about 8 to about 10.

4. A polymer as claimed in claim 3, wherein a portion of the total weight of monomers (a) and (b) is from about 5 to about 35 weight percent of $(C_{16}-C_{20})$alkyl methacrylates, $(C_{16}-C_{20})$alkyl acrylates or mixtures thereof.

5. A polymer as claimed in claim 4, wherein monomer (b) is selected from 2-hydroxyethyl methacrylate, 2-hydroxyethyl acrylate, 2-hydroxypropyl methacrylate, 1-methyl-2-hydroxyethyl methacrylate, 2-hydroxypropyl acrylate, 1-methyl-2-hydroxyethyl acrylate, 2-hydroxybutyl methacrylate and 2-hydroxybutyl acrylate.

6. A polymer as claimed in claim 1, wherein monomer (a) comprises:
   (i) from 0 to about 40% by weight of an alkyl methacrylate or alkylacrylate in which the alkyl group contains from 1 to 6 carbon atoms, or mixtures thereof;

(ii) from 30 to about 90% by weight of an alkyl methacrylate or alkyl acrylate in which the alkyl group contains from 7 to 15 carbon atoms, or mixture thereof;

(iii) from 0 to about 40% by weight of an alkyl methacrylate or alkyl acrylate in which the alkyl group contains from 16 to 24 carbon atoms, or mixture thereof;

and monomer (b) comprises from less than 10 to about 2% by weight of a hydroxyalkyl methacrylate or acrylate in which the alkyl group contains from 2 to 6 carbon atoms and is substituted with one or more hydroxyl groups, or mixture thereof, wherein monomer (b) contains less than about 0.5% by weight of crosslinker or crosslinker precursor materials, and

the total of (i), (ii), (iii) and (b) equals 100% by weight of the polymer.

7. A polymer as claimed in claim 6, wherein the polymer comprises 0 to about 25% (i), about 45 to about 85% (ii), about 5 to about 35% (iii), and about 4 to about 8% (b).

8. A polymer as claimed in claim 6, wherein the average number of carbon atoms is from about 8 to about 10.

9. A polymer as claimed in claim 6, wherein monomer (b) is selected from hydroxy-$(C_2$-$C_6)$alkyl methacrylates containing less than about 0.2% by weight of crosslinker or crosslinker precursor materials.

10. A polymer as claimed in claim 9, wherein the polymer has a weight-average molecular weight from about 100,000 to about 1,000,000.

11. A polymer as claimed in claim 10, wherein the polymer comprises 5 to about 15% (i), about 50 to about 60% (ii), about 25 to about 35% (iii), and about 5 to about 6% (b).

12. A polymer as claimed in claim 10, which has a polydispersity index of 1.5 to about 15.

13. A polymer as claimed in claim 11, which has a polydispersity index of about 2 to about 4.

14. A polymer as claimed in claim 11, wherein monomer (b) is selected from 2-hydroxyethyl methacrylate, 2-hydroxyethyl acrylate, 2-hydroxypropyl methacrylate, 1-methyl-2-hydroxyethyl methacrylate, 2-hydroxypropyl acrylate, 1-methyl-2-hydroxyethyl acrylate, 2-hydroxybutyl methacrylate, and 2-hydroxybutyl acrylate.

15. A polymer as claimed in claim 14, wherein monomer (b) is a mixture of 2-hydroxypropyl methacrylate and 1-methyl-2-hydroxyethyl methacrylate containing less than about 0.1% by weight of crosslinker or crosslinker precursor materials.

16. A polymer as claimed in claim 15, wherein (i) is about 10% methyl methacrylate, (ii) is about 55% isodecyl methacrylate, (iii) is about 30% cetyl-eicosyl methacrylate and the amount of (b) is about 5%.

17. A polymer as claimed in claim 11, wherein the polymer has a weight-average molecular weight from about 300,000 to about 800,000 and an average number of carbon atoms in the alkyl portion of the acrylate or methacrylate backbone polymer from about 8 to about 10.

18. A polymer as claimed in claim 6, wherein (i) is selected from one or more of methyl methacrylate, butyl methacrylate and isobutyl meth-acrylate, (ii) is selected from one or more of 2-ethylhexyl methacrylate, isodecyl methacrylate, dodecyl-pentadecyl methacrylate and lauryl-myristyl methacrylate, (iii) is selected from one or more of cetyl-stearyl methacrylate and cetyl-eicosyl methacrylate, and (b) is selected from one or more of 2-hydroxyethyl methacrylate, 2-hydroxyethyl acrylate, 2-hydroxypropyl methacrylate, 1-methyl-2-hydroxyethyl methacrylate, 2-hydroxypropyl acrylate, 1-methyl-2-hydroxyethyl acrylate, 2-hydroxybutyl methacrylate and 2-hydroxybutyl acrylate.

19. A polymer as claimed in claim 18, wherein the polymer has a weight-average molecular weight from about 100,000 to about 1,000,000.

**20.** A polymer as claimed in claim 18, wherein (i) is about 10% methyl methacrylate, (ii) is about 55% isodecyl methacrylate, (iii) is about 30% cetyl-stearyl, methacrylate and (b) is about 5% of a mixture of 2-hydroxypropyl methacrylate and 1-methyl-2-hydroxyethyl methacrylate.

**21.** A polymer as claimed in claim 18, wherein (i) is about 20% butyl methacrylate, (ii) is about 45% isodecyl methacrylate, (iii) is about 30% of a monomer selected from cetyl-stearyl methacrylate and cetyl-eicosyl methacrylate, and (b) is about 5% of a mixture of 2-hydroxypropyl methacrylate and 1-methyl-2-hydroxyethyl methacrylate.

**22.** A polymer as claimed in claim 18, wherein (i) is about 20% isobutyl methacrylate, (ii) is about 45% isodecyl methacrylate, (iii) is about 30% of a monomer selected from cetyl-stearyl methacrylate and cetyl-eicosyl methacrylate, and (b) is about 5% of a mixture of 2-hydroxypropyl methacrylate and 1-methyl-2-hydroxyethyl methacrylate.

**23.** A polymer as claimed in claim 18, wherein (i) is about 15% of a monomer selected from butyl methacrylate and isobutyl methacrylate, (ii) is about 80% of a monomer selected from lauryl-myristyl methacrylate and dodecyl-pentadecyl methacrylate, the amount of (iii) is 0%, and (b) is about 5% of a mixture of 2-hydroxypropyl methacrylate and 1-methyl-2-hydroxy-ethyl methacrylate.

**24.** A polymer as claimed in claim 18, wherein (i) is from about 5 to about 10% methyl methacrylate, (ii) is from about 85 to about 90% of a monomer selected from lauryl-myristyl methacrylate, isodecyl methacrylate and dodecyl-pentadecyl methacrylate, (iii) is zero to about 5% cetyl-eicosyl methacrylate, and (b) is about 5% of a mixture of 2-hydroxypropyl methacrylate and 1-methyl-2-hydroxy-ethyl methacrylate.

**25.** A process for preparing a polymer, which comprises polymerizing monomers comprising:-
(a) from about 90 to about 98 weight percent of one or more monomer selected from $(C_1-C_{24})$alkyl methacrylates and $(C_1-C_{24})$alkyl acrylates; and
(b) from less than 10 to about 2 weight percent of one or more monomer selected from hydroxy$(C_2-C_6)$alkyl methacrylates and hydroxy-$(C_2-C_6)$alkyl acrylates; and wherein the number of carbon atoms in the alkyl groups averages from about 7 to about 12.

**26.** A concentrate for use in lubricating oils comprising (i) from about 30 to 70% by weight of a polymer as claimed in any of claims 1 to 24, or as prepared by a process as claimed in claim 25, and (ii) a diluent.

**27.** A concentrate as claimed in claim 26, wherein the polymer comprises about 10% methyl methacrylate, about 55% isodecyl methacrylate, about 30% cetyl-eicosyl methacrylate, about 5% of a mixture of 2-hydroxypropyl methacrylate and 1-methyl-2-hydroxyethyl methacrylate and has a weight-average molecular weight from about 100,000 to about 1,000,000.

**28.** A lubricating oil composition, which comprises a lubricating oil and from about 0.5 to 15% by weight of a polymer as claimed in any of claims 1 to 24, or as prepared by a process as claimed in claim 25.

**29.** A lubricating oil composition as claimed in claim 28, wherein the polymer comprises about 10% methyl methacrylate, about 55% isodecyl methacrylate, about 30% cetyl-eicosyl methacrylate, and about 5% of a mixture of 2-hydroxypropyl methacrylate and 1-methyl-2-hydroxyethyl methacrylate and has a weight-average molecular weight from about 100,000 to about 1,000,000.

**30.** An automatic transmission fluid which comprises from about 1 to 8% by weight of a polymer as claimed in any of claims 1 to 24, or as prepared by a process as claimed in claim 25.

**31.** An automatic transmission fluid as claimed in claim 30, wherein the polymer comprises 0 to about 5% methyl methacrylate, about 80 to about 90% lauryl-myristyl methacrylate, 0 to about 10% cetyl-eicosyl methacrylate, and about 5% of a mixture of 2-hydroxypropyl methacrylate and 1-methyl-2-hydroxyethyl methacrylate and has a weight-average molecular weight from about 100,000 to about 1,000,000.

**32.** An automatic transmission fluid as claimed in claim 30, wherein the polymer comprises 0 to about 20% butyl methacrylate, about 65 to about 90% lauryl-myristyl methacrylate, 0 to about 10% cetyl-eicosyl

15

methacrylate, and about 5% of a mixture of 2-hydroxypropyl methacrylate and 1-methyl-2-hydroxyethyl methacrylate, and has a weight-average molecular weight from about 100,000 to about 1,000,000.

33. Use of a polymer as claimed in any of claims 1 to 24, or as prepared by a process as claimed in claim 25, in a lubricating oil composition.

European Patent
Office

EUROPEAN SEARCH REPORT

Application Number

EP    92 30 7666

Page 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-1 333 733 (SHELL)<br><br><br>* the whole document *<br>--- | 1,2,6,9, 10, 12-14, 26,28,33 | C08F220/18<br>C10M145/14<br>//C10N30:02<br>C10N30:04<br>C10N40:00B<br>C10N40:04 |
| X | GB-A-1 189 281 (SHELL)<br><br><br>* page 8; claims 1-41 *<br>--- | 1,2,6,9, 10,26, 28,33 | |
| D,X | DATABASE WPIL<br>Week 7422,<br>Derwent Publications Ltd., London, GB;<br>AN 74-40612V<br>& JP-A-48 039 506 (KANEGAFUCHI)<br>* abstract *<br>--- | 1,25,26, 28,33 | |
| X | EP-A-0 436 872 (RÖHM)<br><br><br>* the whole document *<br>--- | 1,2,6,9, 10,25, 26,30 | |
| | | | TECHNICAL FIELDS SEARCHED (Int. Cl.5) |
| X | US-A-3 198 739 (RICHARDS)<br><br><br>* the whole document *<br>--- | 1,2,6,9, 10,25, 26,28,33 | C10M<br>C08F |
| D,X | EP-A-0 418 610 (RÖHM)<br><br><br>* the whole document *<br>--- | 1,2,6,9, 10,25, 26,28,33 | |
| D,A | US-A-3 598 737 (MEIJ(VAN DER))<br>* the whole document *<br>--- | 1-33 | |
| A | US-A-3 377 285 (RANDLES)<br>* the whole document *<br>--- | 1-33 | |
| | -/-- | | |

The present search report has been drawn up for all claims

| Place of search | Date of completion of the search | Examiner |
|---|---|---|
| THE HAGUE | 24 SEPTEMBER 1993 | DE LA MORINERIE |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,A | US-A-3 311 597 (MOTTUS) <br> * the whole document * | 1-33 | |
| A | FR-A-1 390 228 (ROHM ET HAAS) <br><br> * the whole document * | 6,18,23, 24,27,29 | |
| | | | TECHNICAL FIELDS SEARCHED (Int. Cl.5 ) |

The present search report has been drawn up for all claims

| Place of search | Date of completion of the search | Examiner |
|---|---|---|
| THE HAGUE | 24 SEPTEMBER 1993 | DE LA MORINERIE |